# EUROPÄISCHE PATENTANMELDUNG

(11) **EP 2 083 151 A1**
(43) Veröffentlichungstag der Anmeldung: **29.07.2009**
(21) Anmeldenummer: 08167897.1
(22) Anmeldetag: 30.10.2008
(51) Int. Cl.: F02B 29/04, F28D 7/16

(54) **Luftansaugkanalsystem mit einem integrierten Ladeluftkühler**

(30) Priorität: 26.01.2008 DE 102008006153
(71) Anmelder: Pierburg GmbH, 41460 Neuss (DE)
(72) Erfinder: Kühnel, Hans-Ulrich, 41239 Mönchengladbach (DE); Hüsges, Hans-Jürgen, 47877 Willich (DE)
(74) Vertreter: Patentanwälte ter Smitten

(57) **Zusammenfassung**

Es sind stranggepresste Ladeluftkühler mit einzelnen Flachrohren bekannt. Des Weiteren sind in ein Luftansaugkanalsystem integrierte Ladeluftkühler bekannt, welche jedoch einen großen Bauraum benötigen.

Erfindungsgemäß wird nun vorgeschlagen, dass das Luftansaugkanalsystem einen Sammelraum (2) aufweist, von dem aus sich zumindest ein Verteilerraum (3) in Richtung der Einzelansaugrohre (4) erstreckt, wobei sich der Querschnitt des zumindest einen Verteilerraums (3) in Richtung zu den Einzelansaugrohren (4) verringert und die Flachrohre (15) in Richtung der Ladeluftströmung unmittelbar vor den Einzelansaugrohren (4) im Verteilerraum (3) angeordnet sind und sich in Richtung zu den Einzelansaugrohren (4) verjüngen.

So ist eine Anpassung an übliche Luftansaugkanalsysteme möglich, wobei ein geringer Bauraum benötigt wird.

## Beschreibung

Die Erfindung betrifft ein Luftansaugkanalsystem mit einem integrierten Ladeluftkühler, welcher aus einzelnen Flachrohren ausgebildet ist, durch die Kühlmittel strömt und zwischen denen Ladeluft strömt, wobei die Kühlmittel führenden Flachrohre mit ihren Enden jeweils in einem Wasserkasten münden, durch den die Enden der Flachrohre gegen das Innere des Ladeluftkühlers verschlossen sind.

Ladeluftkühler für Verbrennungskraftmaschinen insbesondere Kraftfahrzeugen sind allgemein bekannt. Sie dienen zur Abkühlung der durch einen Kompressor oder Turbolader komprimierten Verbrennungsluft. Neben den früher verwendeten luftgekühlten Ladeluftkühlern sind in den letzten Jahren zunehmend kühlmittelgekühlte Ladeluftkühler eingeführt worden.

Durch die Verwendung eines Turboladers oder eines Kompressors erhöht sich in der Regel der Wirkungsgrad des Verbrennungsmotors im Vergleich zu einem nicht aufgeladenen Verbrennungsmotor, da die Energie der ausströmenden Abgase genutzt wird. Es hat sich gezeigt, dass bei Dieselmotoren der Wirkungsgrad durch die Aufladung erhöht wurde und hierdurch der Kraftstoffverbrauch vermindert werden konnte, jedoch bei Otto-Motoren lediglich eine Mehrleistung erzielt wurde, jedoch ohne den Wirkungsgrad merklich zu verbessern. Dies entsteht insbesondere durch die Temperaturerhöhung der Ladeluft in der Abgasturbine, welche neben der erwünschten Dichtesteigerung der Verbrennungsluft entsteht. Durch diese Temperaturerhöhung wird das Temperaturniveau des Arbeitsprozesses erhöht und zusätzlich die in den Motor einzubringende Luftmasse wegen ihrer bei höherer Temperatur geringeren Dichte reduziert. Aus diesem Grund werden Ladeluftkühler verwendet, so dass die Luftdichte bei gleichem Ladedruck erhöht werden kann und gleichzeitig die Lufttemperatur abgesenkt werden kann. Auf diese Weise kann durch die Kühlung der Ladeluft sowohl das Temperaturniveau im Arbeitsprozess verringert werden, als auch die Luftdichte bei gleichem Ladedruck zusätzlich erhöht werden, wodurch eine Wirkungsgraderhöhung auch bei Otto-Verbrennungsmotoren erreicht wird.

Es sind verschiedene Formen von Kühlmittel gekühlten Ladeluftkühlern bekannt. So wird in der DE 38 13 339 A1 ein Ladeluftkühler offenbart, der aus einzelnen, übereinander liegenden Flachrohren aufgebaut ist, zwischen denen der Ladeluftstrom geführt wird. Das Kühlmittel fließt durch die Flachrohre im Kreuzstromverfahren im Ladeluftkühler. Die Flachrohre werden bei dieser Ausführung durch ein erstes und ein zweites Profil gesteckt, die gemeinsam einen Wasserkasten des Ladeluftkühlers bilden. Durch diese Profile wird gleichzeitig der Verschluss der Kühlmittel führenden Flachrohre gegenüber der Ladeluft erreicht. Nachteilig an einem derartigen Ladeluftkühler ist, dass seine Einbindung in ein Luftansaugkanalsystem zusätzliche Herstell- und Montagekosten verursacht.

Aus der DE10 2005 053 924 A1 ist ein Wärmetauscher in Plattenbauweise bekannt, der als Ladeluftkühler dient und in ein Luftansaugkanalsystem integriert ist. Ein Deckelteil dieses Ladeluftkühlers, an dem auch der Kühlmitteleinlauf- und Ablaufstutzen ausgebildet sind, dient gleichzeitig als Teil des Gehäuses des Luftansaugkanalsystems. Dieser Kühler wird ebenfalls im Kreuzstromverfahren durchströmt und ist unmittelbar hinter dem Sammelraum des Luftansaugkanalsystems angeordnet. Hinter dem Ladeluftkühler befindet sich ein relativ groß gebauter Verteilerraum, von dem aus die Luft in die Einzelansaugrohre strömen kann. Nachteilig an einer derartigen Ausführung ist der benötigte, relativ große Bauraum, der in heutigen Verbrennungskraftmaschinen in der Regel nicht zur Verfügung steht. Zusätzlich bestehen vor und hinter dem Ladeluftkühler Einschnürungen und Erweiterungen, die zu einem Druckverlust führen.

Es ist daher Aufgabe der Erfindung, einen Ladeluftkühler derart in ein Luftansaugkanalsystem zu integrieren, dass möglichst wenig Bauraum für den Ladeluftkühler benötigt wird, wobei gleichzeitig eine möglichst kostengünstige Herstellung und Montage, ein hoher Wirkungsgrad des Ladeluftkühlers und geringe Druckverluste durch den Ladeluftkühler erreicht werden.

Diese Aufgabe wird erfindungsgemäß dadurch gelöst, dass das Luftansaugkanalsystem einen Sammelraum aufweist, von dem aus sich zumindest ein Verteilerraum in Richtung von Einzelansaugrohren erstreckt, wobei sich der Querschnitt des zumindest einen Verteilerraums in Richtung zu den Einzelansaugrohren verringert und die Flachrohre in Richtung der Ladeluftströmung unmittelbar vor den Einzelansaugrohren im Verteilerraum angeordnet sind und sich in Richtung zu den Einzelansaugrohren verjüngen. Durch eine derartige Ausführung besteht beinahe kein zusätzlicher Platzbedarf im Vergleich zu nicht aufgeladenen Verbrennungsmotoren bzw. Verbrennungsmotoren ohne Ladeluftkühlung, da der Verteilerraum optimal zur Kühlung der Ladeluft genutzt wird.

In einer weiterführenden Ausführungsform verjüngen sich die Flachrohre in Richtung der Ladeluftströmung derart, dass ein im Wesentlichen konstanter von Ladeluft durchströmbarer Querschnitt im Verteilerraum entsteht. Durch diesen konstanten Querschnitt im Bereich des Verteilerraums werden zusätzliche Druckverluste im Bereich des Ladeluftkühlers durch vorhandene Strömungshindernisse zuverlässig vermieden.

In einer weiterführenden Ausführungsform ist der Verteilerraum in Strömungsrichtung gebogen geformt, so dass unterschiedlich lange Strömungswege der Ladeluft entstehen, wobei der Abstand der Flachrohre im Querschnitt des Ladeluftkühlers unterschiedlich ist. Eine derartige Form des Verteilerraums ist bei den meisten Verbrennungsmotoren üblich, um eine möglichst gleichmäßige Anströmung der Einzelansaugrohre erreichen zu können. Hierdurch entstehen jedoch unterschiedlich lange Strömungswege der Ladeluft. Um dennoch eine gleichmäßige Kühlleistung erreichen zu können, kann durch den unterschiedlichen Abstand der Flachrohre zueinander der Druckverlust in den Bereichen unterschiedlich langer Strömungswege so eingestellt werden, dass die Verweilzeit oder die Strömungsgeschwindigkeit der Luft im Ladeluftkühler im Wesentlichen über die Bauhöhe des Kühlers konstant ist. Hierdurch kann der Wirkungsgrad zusätzlich erhöht werden.

Die gleiche Wirkung lässt sich durch eine alternative Ausführung erzielen, bei der die Flachrohre im Querschnitt unterschiedlich stark gewellt ausgeführt sind.

Vorzugsweise ist an den Einzelansaugrohren im zum Ladeluftkühler weisenden Bereich ein Einlaufradius ausgebildet. Dieser ist vorteilhafterweise stetig auszubilden, so dass Druckverluste weiter verringert werden können, indem plötzliche Querschnittsverengungen und -erweiterungen vermieden werden.

In einer hierzu weiterführenden Ausführungsform weisen die Einzelansaugrohre im Anschlussbereich an den Verteilerraum im Querschnitt zur Ladeluftströmung oval geformte Anschlussflansche auf. Diese dienen dazu, zwischen Verteilerraum und Anschlussflanschen den Druckverlust möglichst gering zu halten und auch hier einen stetigen Übergang zu erreichen, obwohl die Verteilung in die Einzelansaugrohre erfolgt.

Vorzugsweise sind die Flachrohre des Ladeluftkühlers durch Strangpressen gemeinsam hergestellt und über Stege miteinander verbunden. Diese Stege werden bei der Herstellung der Flachrohre in einem Strangpressverfahren gleichzeitig hergestellt und sind zunächst, nach dem Strangpressen, als vollständige Platten an den Seiten der Flachrohre angeordnet. Durch anschließendes Sägen oder Fräsen werden große Teile dieser Platten anschließend entfernt, so dass nur noch Stege vorhanden sind, die der Festigkeit der Flachrohrpackung dienen und die spätere Montage deutlich vereinfachen.

In einer weiterführenden Ausführungsform weist jeweils ein Profil des Wasserkastens zur Form der Flachrohre korrespondierende Öffnungsschlitze auf, in die Flachrohre reichen. Hierdurch erfolgt sowohl eine Befestigung der Flachrohre als auch eine Abtrennung des Kühlmittel durchströmten Bereichs vom Ladeluft durchströmten Bereich.

In einer hierzu weiterführenden Ausführungsform weisen die Öffnungsschlitze jeweils einen umlaufenden Anschlag auf, gegen den die Flachrohre im eingebauten Zustand anliegen. Hierdurch erfolgt sowohl eine Fixierung des Profils an den Flachrohren als auch die Möglichkeit einer einfacheren Befestigung der Flachrohre im Bereich der Schlitze.

So sind die Flachrohre vorzugsweise an ihren Enden mit dem Profil verklebt, wodurch ein einfacher und zuverlässiger Verschluss zwischen den Kühlmittel bzw. Ladeluft führenden Teile des Ladeluftkühlers erreicht wird.

Vorzugsweise sind die Wasserkästen jeweils durch einen Deckel verschlossen, wobei ein Kühlmittelzulaufstutzen an einem ersten der beiden Deckel ausgebildet ist und ein Kühlmittelablaufstutzen an diesem ersten Deckel oder dem gegenüberliegenden zweiten Deckel ausgebildet ist, so dass hier keine zusätzlichen Teile benötigt werden.

Vorzugsweise dienen die Deckel hierbei als Teil eines Gehäuses des Luftansaugkanalsystems, wodurch eine hohe Integration des Kühlers im Luftansaugkanalsystem erreicht wird.

Es wird somit ein Luftansaugkanalsystem mit einem integrierten Ladeluftkühler geschaffen, welches einen sehr geringen Bauraumbedarf aufweist und insbesondere durch die Herstellung mittels Strangpressen sehr kostengünstig hergestellt werden kann, wobei ein hoher Wirkungsgrad erreicht wird.

Ein Ausführungsbeispiel ist in den Zeichnungen dargestellt und wird nachfolgend beschrieben.

Figur 1 zeigt eine Seitenansicht eines erfindungsgemäßen Luftansaugkanalsystems mit einem integrierten Ladeluftkühler einer Verbrennungskraftmaschine in V-Bauart in geschnittener Darstellung.

Figur 2 zeigt in dreidimensionaler, gesprengter Darstellung den Ladeluftkühler aus Figur 1.

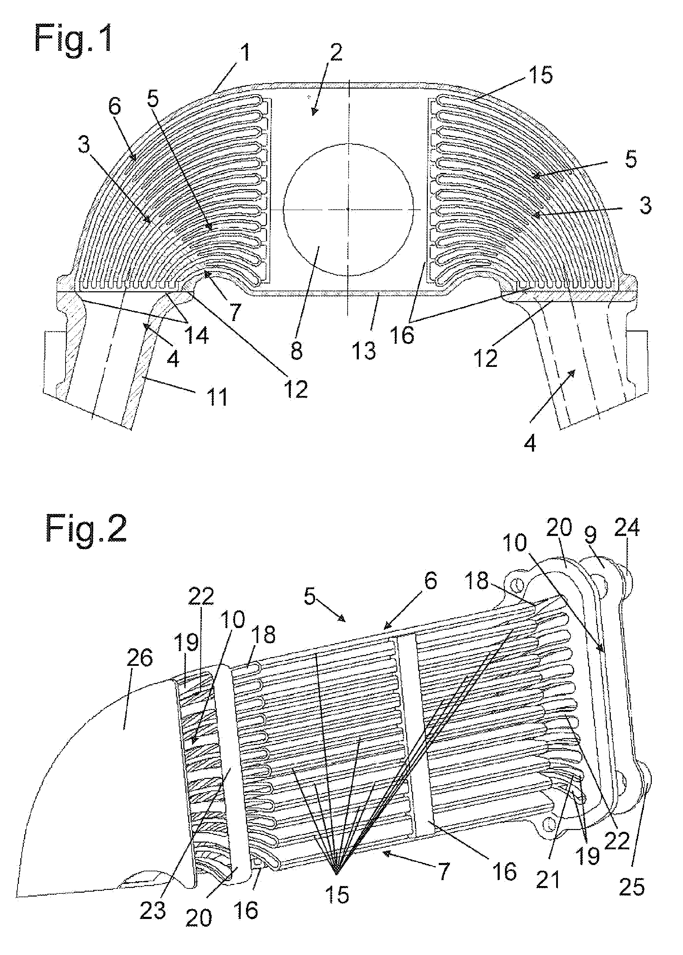

Das in der Figur 1 dargestellte Luftansaugkanalsystem weist ein Gehäuse 1 auf, in dem ein Sammelraum 2, zwei Verteilerräume 3 sowie mehrere Einzelansaugrohre 4 ausgebildet sind, von denen zwei in Figur 1 dargestellt sind. Es handelt sich um ein Luftansaugkanalsystem für einen V-Motor mit zwei voneinander getrennten Zylinderbänken, von denen eine erste Zylinderbank über die in der linken Seite der Darstellung gebildeten Einzelansaugrohre 4 mit Ladeluft versorgt wird und die zweite Zylinderbank über die im rechten Bereich dargestellten Einzelansaugrohre 4 mit Ladeluft versorgt wird. Die Einzelansaugrohre 4 sind somit hintereinander liegend für die rechte und die linke Zylinderbank angeordnet.

In den Verteilerräumen 3 ist jeweils ein Ladeluftkühler 5 angeordnet, welcher an einer oberen Seite 6 sowie einer unteren Seite 7 durch ein Gehäuseteil 13 des Gehäuses 1 des Luftansaugkanalsystems verschlossen wird.

Der Sammelraum 2 ist mit Ausnahme eines Lufteinlasses 8 vollständig durch das Gehäuse 1 gegenüber der außen liegenden Umgebung geschlossen. Die in der Ansicht vorne bzw. hinten liegenden Seitenwände des Gehäuses 1 im Bereich des Verteilerraums 3 werden durch Deckel 9, 26 verschlossen, die gleichzeitig Teil eines Wasserkastens 10 des Ladeluftkühlers 5 sind.

An die Verteilerräume 3 schließt sich jeweils ein Gehäuseteil 11 des Gehäuses 1 an, in dem die Einzelansaugrohre 4 ausgebildet sind, wobei das Gehäuseteil 11 über Anschlussflansche 12 an dem den Verteilerraum 3 und Sammelraum 2 bildenden Gehäuseteil 13 angeschlossen sind. Diese Anschlussflansche 12 weisen für jedes Einzelansaugrohr 4 eine ovale Form auf, so dass die Einschürung nach dem Durchströmen des Verteilerraums 3 zu den Einzelansaugrohren 4 möglichst gering bleibt. So schließt sich an den Anschlussflansch 12 jeweils ein Einlaufradius 14 der Einzelansaugrohre 4 an, so dass ein stetig sich verengender Kanal in den Einzelansaugrohren 4 gebildet wird, wodurch Druckverluste relativ gering gehalten werden können.

Der Aufbau des Ladeluftkühlers 5 ist insbesondere in Figur 2 zu erkennen.

Der Ladeluftkühler 5 besteht aus mehreren, übereinander angeordneten Flachrohren 15, die vorzugsweise im Strangpressverfahren gemeinsam hergestellt werden. Diese Flachrohre 15 sind über Stege 16 miteinander verbunden und verjüngen sich in Strömungsrichtung der Ladeluft im Wesentlichen im gleichen Maß wie der Verteilerraum 3 in Strömungsrichtung der Ladeluft eingeschnürt wird. Hierdurch entsteht eine weitestgehend störungsfreie Strömung zwischen den Flachrohren, so dass der Druckverlust äußerst gering bleibt.

Die Stege 16 werden vorzugsweise mit den Flachrohren 15 im Strangpressverfahren hergestellt, wobei diese zunächst als Platte an den jeweiligen Strömungsenden der des Stapels an Flachrohren 15 befestigt sind. Der übrige Teil der Platte wird mit Ausnahme der Stege 16 anschließend weggesägt oder weggefräst. Die Stege 16 sollten dabei in einer Breite vorhanden bleiben, dass eine ausreichende Stabilität der Anordnung der Flachrohre 15 zueinander erreicht wird.

Die offenen Enden 18 der Flachrohre 15 werden in Öffnungsschlitze 19 eines Profils 20 gesteckt. Vorzugsweise sind die Schlitze 19 derartig ausgebildet, dass sie in dem Einführungsbereich im Wesentlichen der Form der Flachrohrenden 18 entsprechen und anschließend einen Absatz aufweisen, der als umlaufender Anschlag 21 für die Flachrohre 15 dient, so dass die Rohre 15 gemeinsam gegen diesen Anschlag 21 geschoben werden können. Zur Befestigung der Rohre können diese entweder am Anschlag 21 oder, falls ein solcher nicht vorhanden ist, nach Durchschieben der Flachrohre 15 im Bereich der Schlitze 19 verklebt werden. Durch die Wand 22 zwischen den Schlitzen wird dann eine Strömung von durch die Flachrohre 15 geführtem Kühlmittel in den Ladeluft führenden Bereich vermieden. Die Wand 22 schließt somit den Ladeluft durchströmten Bereich zu diesen Seiten ab.

Die Profile 20 weisen zusätzlich zu dieser, zwischen den Schlitzen 19 liegenden Wand 22, eine senkrecht hierzu stehende, umlaufende Außenwand 23 auf, die, gemeinsam mit der Wand 22, sowie dem Deckel 9, den Wasserkasten 10 bildet.

An einem der Deckel 9 ist ein Kühlmittelzulaufstutzen 24 sowie ein Kühlmittelablaufstutzen 25 angeordnet, über den Kühlmittel in einen ersten der Wasserkästen 10 fließen kann. Von hier aus gelangt das Kühlmittel durch die Flachrohre 15 zum gegenüberliegenden Wasserkasten 10. Selbstverständlich ist es möglich, durch entsprechend ausgebildete, nicht dargestellte Stege an den Deckeln 9 oder den Profilen 20 eine Zwangsdurchströmung der Flachrohre 15 herbeizuführen oder aber den Kühlmittelablaufstutzen 25 an der entgegengesetzten Seite des Ladeluftkühlers 5 anzuordnen.

Wird nun die von einem Turbolader verdichtete und aufgeheizte Ladeluft in den Sammelraum 2 eingeführt, kann diese entlang der sich verjüngenden Flachrohre 15 zu den Einzelansaugrohren 4 strömen und wird im Verteilerraum 3 bzw. im Bereich des Ladeluftkühlers 5 durch das im Kreuzstromverfahren durch die Flachrohre 15 geführte Kühlmittel gekühlt.

Wie insbesondere bei V-Motoren üblich, ist der Bereich des Verteilerraums 3 gebogen ausgeführt, so dass nicht nur eine Einschnürung des insgesamt vorhandenen Querschnitts im Verteilerraum 3 die Folge ist, sondern auch unterschiedlich lange Strömungswege entstehen. Um dennoch einen möglichst guten Kühlungswirkungsgrad zu erzielen, kann es sinnvoll sein, die Rohrabstände zueinander unterschiedlich auszuführen. Durch die unterschiedlich langen Strömungswege und die gebogene Struktur der Flachrohre 15 bzw. des Verteilerraums 3 können, je nach Bauform des Verteilerraums 3, unterschiedliche Strömungswiderstände im oberen bzw. unteren Bereich sowohl bei der Einströmung als auch bei der Durchströmung des Ladeluftkühlers 5 auftreten. Um ein gleichmäßiges Einströmen zwischen die Flachrohre 15 sicher zu stellen, müssten die Abstände im oben liegenden Bereich größer gewählt werden, als im unten liegenden Bereich, da ein größerer Strömungswiderstand durch die größeren Lauflängen auftritt. Andererseits würde hierdurch die Verweilzeit der Luft in diesem Bereich erhöht. Durch optimale Auslegung der Abstände der Flachrohre 15 zueinander und somit einer optimalen Auslegung der Verweilzeiten und Strömungsgeschwindigkeiten, kann, je nach Bauform, durch entsprechende Beeinflussung der Verweilzeit und der Strömungsgeschwindigkeiten ein optimaler Kühlerwirkungsgrad erzielt werden.

Es sollte klar sein, dass je nach Motorbauform und Form des Verteilerraums 3, in dem der Ladeluftkühler 5 angeordnet ist, die Form der Flachrohre 15 angepasst werden kann. Zur Änderung der Strömungswiderstände und Strömungsgeschwindigkeiten in den unten oder oben liegenden Bereichen des Ladeluftkühlers können auch unterschiedlich stark gewellte Oberflächen der Flachrohre 15 vorgesehen werden.

Ein derartiges Luftansaugkanalsystem mit integriertem Ladeluftkühler benötigt im Vergleich zu Luftansaugkanalsystemen ohne Kühler beinahe keinen zusätzlichen Bauraum und ist sehr einfach und kostengünstig herzustellen und zu montieren, wobei gleichzeitig die auftretenden Druckverluste minimiert werden und ein sehr guter Kühlerwirkungsgrad erzielt werden kann. Des Weiteren entfallen Kosten für zusätzliche Bauteile und Anschlüsse.

## Patentansprüche

1. Luftansaugkanalsystem mit einem integrierten Ladeluftkühler (5), welcher aus einzelnen Flachrohren (15) ausgebildet ist, durch die Kühlmittel strömt und zwischen denen Ladeluft strömt, wobei die Kühlmittel führenden Flachrohre (15) mit ihren Enden (18) jeweils in einem Wasserkasten (10) münden, durch den die Enden (18) der Flachrohre (15) gegen das Innere des Ladeluftkühlers (5) verschlossen sind,
**dadurch gekennzeichnet, dass**
das Luftansaugkanalsystem einen Sammelraum (2) aufweist, von dem aus sich zumindest ein Verteilerraum (3) in Richtung von Einzelansaugrohren (4) erstreckt, wobei sich der Querschnitt des zumindest einen Verteilerraums (3) in Richtung zu den Einzelansaugrohren (4) verringert und die Flachrohre (15) in Richtung der Ladeluftströmung unmittelbar vor den Einzelansaugrohren (4) im Verteilerraum (3) angeordnet sind, und sich in Richtung zu den Einzelansaugrohren (4) verjüngen.

2. Luftansaugkanalsystem mit einem integrierten Ladeluftkühler (5) nach Anspruch 1,
**dadurch gekennzeichnet, dass**
sich die Flachrohre (15) in Richtung der Ladeluftströmung derart verjüngen, dass ein im Wesentlichen konstanter, von Ladeluft durchströmbarer Querschnitt im Verteilerraum (3) entsteht.

3. Luftansaugkanalsystem mit einem integrierten Ladeluftkühler (5) nach einem der Ansprüche 1 oder 2,
**dadurch gekennzeichnet, dass**
der Verteilerraum (3) in Strömungsrichtung der Ladeluft gebogen geformt ist, so dass unterschiedlich lange Strömungswege der Ladeluft entstehen, wobei der Abstand der Flachrohre (15) im Querschnitt des Ladeluftkühlers (5) unterschiedlich ist.

4. Luftansaugkanalsystem mit einem integrierten Ladeluftkühler (5) nach einem der Ansprüche 1 oder 2,
**dadurch gekennzeichnet, dass**
der Verteilerraum (3) in Strömungsrichtung gebogen geformt ist, so dass unterschiedlich lange Strömungswege der Ladeluft entstehen, wobei die Flachrohre im Querschnitt unterschiedlich stark gewellt ausgeführt sind.

5. Luftansaugkanalsystem mit einem integrierten Ladeluftkühler (5) nach einem der vorhergehenden Ansprüche,
**dadurch gekennzeichnet, dass**
an den Einzelansaugrohren (4) am zum Ladeluftkühler (5) weisenden Bereich ein Einlaufradius (14) ausgebildet ist.

6. Luftansaugkanalsystem mit einem integrierten Ladeluftkühler (5) nach Anspruch 5,
**dadurch gekennzeichnet, dass**
die Einzelansaugrohre (4) im Anschlussbereich an den Verteilerraum (3) im Querschnitt zur Ladeluftströmung oval geformte Anschlussflansche (12) aufweisen.

7. Luftansaugkanalsystem mit einem integrierten Ladeluftkühler (5) nach einem der vorhergehenden Ansprüche,
**dadurch gekennzeichnet, dass**
die Flachrohre (15) des Ladeluftkühlers (5) durch Strangpressen gemeinsam hergestellt sind und über Stege (16) miteinander verbunden sind.

8. Luftansaugkanalsystem mit einem integrierten Ladeluftkühler (5) nach einem der vorhergehenden Ansprüche,
**dadurch gekennzeichnet, dass**
jeweils ein Profil (20) des Wasserkastens (10) zur Form der Flachrohre (15) korrespondierende Öffnungsschlitze (19) aufweist, in die die Flachrohre (15) reichen.

9. Luftansaugkanalsystem mit einem integrierten Ladeluftkühler (5) nach Anspruch 8,
**dadurch gekennzeichnet, dass**
die Öffnungsschlitze (19) jeweils einen umlaufenden Anschlag (22) aufweisen, gegen den die Flachrohre (15) im eingebauten Zustand anliegen.

10. Luftansaugkanalsystem mit einem integrierten Ladeluftkühler (5) nach einem der Ansprüche 8 oder 9,
**dadurch gekennzeichnet, dass**
die Flachrohre (15) an ihren Enden (18) mit dem Profil (20) verklebt sind.

11. Luftansaugkanalsystem mit einem integrierten Ladeluftkühler (5) nach einem der vorhergehenden Ansprüche,
**dadurch gekennzeichnet, dass**
die Wasserkästen (10) jeweils durch einen Deckel (9) verschlossen sind, wobei ein Kühlmittelzulaufstutzen (24) an einem ersten der beiden Deckel (9) ausgebildet ist und ein Kühlmittelablaufstutzen (25) an diesem ersten Deckel (9) oder einem zweiten Deckel (26) ausgebildet ist.

12. Luftansaugkanalsystem mit einem integrierten Ladeluftkühler (5) nach einem der vorhergehenden Ansprüche,
**dadurch gekennzeichnet, dass**
die Deckel (9, 26) als Teil eines Gehäuses (1) des Luftansaugkanalsystems dienen.
